Europäisches Patentamt

European Patent Office

Office européen des brevets

(11) Veröffentlichungsnummer : **0 090 429**
**B1**

(12) **EUROPÄISCHE PATENTSCHRIFT**

(45) Veröffentlichungstag der Patentschrift :
27.07.88

(21) Anmeldenummer : 83103200.8

(22) Anmeldetag : 31.03.83

(51) Int. Cl.⁴ : **F 24 J   3/00, F 24 D  11/02**

(54) **Wärmepumpenanlage.**

(30) Priorität : 02.04.82 DE 3212369
24.05.82 DE 3219449
24.05.82 DE 3219450
04.06.82 DE 3221027

(43) Veröffentlichungstag der Anmeldung :
05.10.83 Patentblatt 83/40

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
EP-A- 0 015 545
EP-A- 0 026 808
EP-A- 0 045 506
DE-A- 2 752 178
DE-A- 2 940 663
DE-A- 2 949 221
DE-A- 3 006 974
DE-A- 3 019 388
DE-A- 3 022 521
DE-A- 3 026 217
DE-A- 3 209 656
DE-C-   171 311
FR-A- 2 035 094
FR-A- 2 415 178
FR-A- 2 486 983

(73) Patentinhaber : Pfeifer, Johann B.
Römerstrasse 60
D-6530 Bingen-Sponsheim (DE)

(72) Erfinder : Pfeifer, Johann B.
Römerstrasse 60
D-6530 Bingen-Sponsheim (DE)

(74) Vertreter : Popp, Eugen, Dr. et al
MEISSNER, BOLTE & PARTNER Widenmayerstrasse
48 Postfach 86 06 24
D-8000 München 86 (DE)

## Beschreibung

Die Erfindung betrifft eine Wärmepumpenanlage mit einem Verdampfer, einem Verdichter und einem Kondensator, gemäß dem Oberbegriff des Patentanspruches 1.

Eine derartige Wärmepumpenanlage ist aus der EP-A-45 506 bekannt. Die bekannte Wärmepumpenanlage hat sich in der Praxis bereits bewährt. Der Heizkörper besitzt dort jedoch nur die Funktion eines Heizkörpers.

Der vorliegenden Erfindung liegt demgegenüber die Aufgabe zugrunde, die bekannte Wärmepumpenanlage so weiter zu entwickeln, daß der Heizkörper sowohl als Heizkörper als auch als Warmwasserbereiter und gegebenenfalls Luftbefeuchter verwendbar bzw. einsetzbar ist.

Diese Aufgabe wird durch die kennzeichnenden Merkmale des Patentanspruches 1 gelöst.

Die erfindungsgemäße Wärmepumpenanlage zeichnet sich also durch einen mehrfunktionalen Heizkörper aus, wobei der Vorteil der bekannten Konstruktion beibehalten wird, wonach der Heizkörper vom heißen Kältemittel unmittelbar durchflossen wird, wodurch ein hoher Wärmeübergangs-Wirkungsgrad erzielbar ist.

Bevorzugte konstruktive Weiterbildungen der Erfindung sind in den Unteransprüchen beschrieben.

Nachstehend wird eine Ausführungsform der erfindungsgemäßen Wärmepumpenanlage anhand der beigefügten Zeichnung näher erläutert. Es zeigen :

Fig. 1 eine schematische Darstellung von Kältemittelkondensations-Heizkörpern als Teil der erfindungsgemäßen Wärmepumpenanlage, wobei die Heizkörper in Reihe hintereinander angeordnet sind ; und

Fig. 2 eine abgewandelte Ausführungsform eines Kältemittelkondensations-Heizkörpers als Teil der erfindungsgemäßen Wärmepumpenanlage, in perspektivischer Darstellung und in vergrößertem Maßstab.

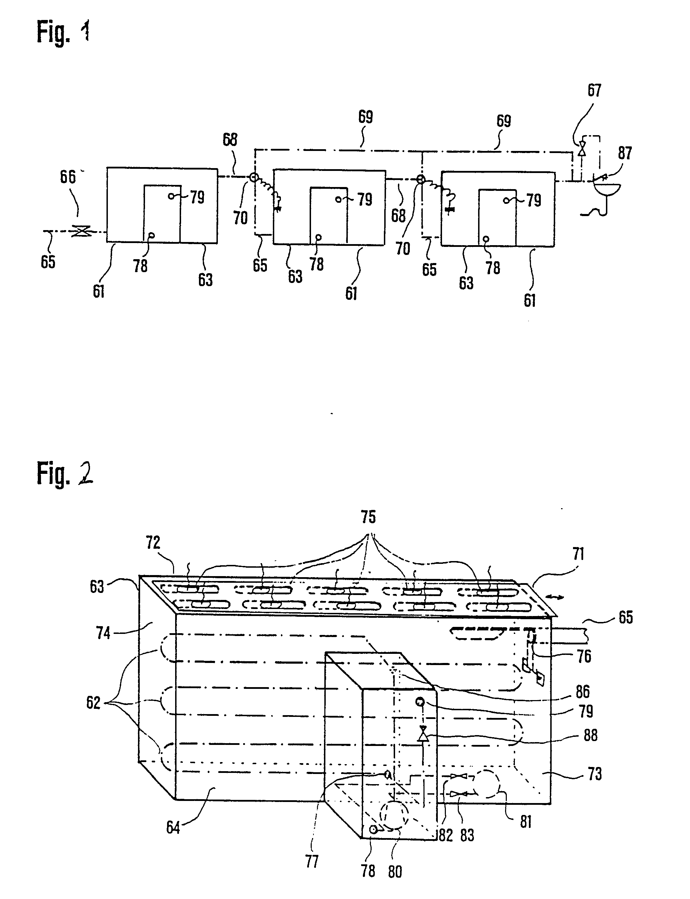

In den Fig. 1 und 2 sind Heizkörper 61 als Teil einer Wärmepumpenanlage mit einem Verdampfer, einem Verdichter und einem Kondensator dargestellt, wobei der Kondensator als Teil des Heizkörpers 61 in einem mit Wasser 64 gefüllten Heizkörperbehälter 63 eingetaucht ist, und wobei Verdampfer, Verdichter und Kondensator Teil eines geschlossenen Kältemittelkreislaufes sind. An die Heizkörperbehälter 63 sind jeweils eine Wasser-Zuflußleitung 65 und eine Wasser-Abflußleitung 68 bzw. Brauchwasser-Anlage 87 angeschlossen.

Bei der Ausführungsform nach Fig. 1 erfolgt der Zufluß von Wasser zu den Heizkörperbehältern 63 über einen Druckminderer 66, wobei ein Überdruck in den Heizkörperbehältern 63 durch ein der Brauchwasser-Anlage 87 zugeordnetes Überdruckventil 67 verhindert wird. Wie ausgeführt, ist die Brauchwasser-Anlage 87 über Wasser-Abflußleitungen 68 mit den Heizkörperbehältern 63 fluidverbunden mit der Folge, daß das in den Heizkörperbehältern 63 erwärmte Speicherwasser 64 zugleich als Brauchwasser verwendet werden kann. Um einzelne, hintereinander angeordnete Heizkörper 61 auch abschalten oder auf verminderter Temperatur betreiben zu können, ist eine mit einem Thermostatventil 70 gesteuerte Überbrückungsleitung 69 vorgesehen. Die Heizkörper 61 können über Schnellkupplungsanschlüsse 78 und 79 auf einfache Weise an einen Kältemittelverdampfer angeschlossen werden.

Jeder Heizkörper 61 besteht aus einem für Heizzwecke geeigneten Heizkörperbehälter 63, der so mit Speicherwasser 64 angefüllt ist, daß eine für Kältemittelkondensation geeignete Rohrleitung im Speicherwasser 64 eingetaucht ist. Weiterhin sind — jedoch vom Speicherwasser 64 getrennt — in dem Heizkörperbehälter 63 integriert oder an diesem zusätzlich angebracht :

ein Kältemittelverdichter 80, ein Kältemittelsammler 81, ein Entspannungsventil 88, zwei Absperrventile 82, 83 sowie zwei Schnellkupplungen 78, 79 (siehe Fig. 2).

Das von dem Verdichter 80 erhitzte Kältemittel strömt durch Kondensationsrohre 62 und erhitzt das Speicherwasser 64. Die Fließrichtung des Kältemittels ist so gewählt, daß das heiße Kältemittel den Heizkörper 61 vom oberen Bereich 86 zum unteren Bereich 77 durchfließt und dabei Wärme an das Speicherwasser 64 abgibt. Auf diese Weise wird gewährleistet, daß das Kältemittel nach vollständiger Abgabe der Wärme wieder in einen der Verdampfer der Wärmepumpenanlage gelangt. Da der Heizkörper 61 an die Wasser-Zuflußleitung 65 angeschlossen und darüber hinaus über die Wasser-Abflußleitung 68 mit der Brauchwasser-Anlage 87 verbunden ist, ist der Heizkörper 61 — wie bereits dargelegt — zugleich als Warmwasserbereiter nutzbar. Um ein möglichst großes Volumen an gespeicherten Wassers zu erreichen, ist es zweckmäßig, mehrere Heizkörper 61 miteinander so zu verbinden, daß nur die Heizkörper 61 an die Brauchwasserstellen Wasser abgeben, die gerade in Betrieb sind. Dies ist durch Parallelschaltung oder Hintereinanderschaltung möglich, wobei durch die erwähnten Überbrückungsleitungen 69 und Absperrventile 82, 83 eine individuelle Anzahl von Heizkörpern 61 für die Brauchwasser-Erwärmung einsetzbar ist.

Entsprechend Fig. 2 dient der Heizkörper 61 zugleich als Luftbefeuchter. Über die Wasser-Zuflußleitung 65 und durch ein dieser zugeordnetes Schwimmerventil 76 ist sichergestellt, daß das Speicherwasser 64 stets konstantes Niveau besitzt. Durch in Anzahl und/oder Querschnitt je nach gewünschter Luftfeuchtigkeit verstellbare Wasser-Verdunstungsöffnungen 75 mit Verdunstungsöffnungsschieber 71 an der Oberseite 72 des Heizkörperbehälters 63 erfolgt eine ständige Feuchtigkeitsabgabe an die Umgebung.

Durch Einziehen einer nicht dargestellten Zwischenwand ist der obere Bereich 74 des Heizkörperbehälters 63 als Wasserverdunster und der untere Bereich 73 des Heizkörperbehälters als Durchlauferhitzer bzw. Heißwasserspeicher verwendbar.

**Patentansprüche**

1. Wärmepumpenanlage mit einem Verdampfer, einem Verdichter und einem Kondensator, wobei der Kondensator als Teil eines Heizkörpers (61) in einem mit Wasser (64) gefüllten Heizkörperbehälter (63) eingetaucht ist, und wobei Verdampfer, Verdichter und Kondensator Teil eines geschlossenen Kältemittelkreislaufes sind, dadurch gekennzeichnet, daß an den Heizkörperbehälter (63) eine Wasser-Zuflußleitung (65) und mindestens eine Wasser-Abflußleitung (68) bzw. Brauchwasser-Anlage (87) angeschlossen sind, und daß der Heizkörperbehälter (63) in einen oberen und einen unteren Bereich unterteilt ist, wobei der untere Bereich zur Heiß- bzw. Brauchwasserbereitung nutzbar ist, während der obere Bereich an seiner Oberseite (72) verschließ- resp. öffenbare Wasser-Verdunstungsöffnungen (75) aufweist.

2. Wärmepumpenanlage nach Anspruch 1, dadurch gekennzeichnet, daß der Wasser-Zuflußleitung (65) ein Schwimmerventil (76) zur Wasserniveau-Regelung im Heizkörperbehälter (63) zugeordnet ist.

3. Wärmepumpenanlage nach Anspruch 1 oder 2, dadurch gekennzeichnet, daß mehrere Heizkörper (63) parallel geschaltet an eine Wasser-Zuflußleitung (65) und Wasser-Abflußleitung (68) zumindest einer Brauchwasser-Anlage (87) angeschlossen sind.

4. Wärmepumpenanlage nach Anspruch 1 oder 2, dadurch gekennzeichnet, daß mehrere Heizkörperbehälter (63) hintereinandergeschaltet an eine Wasser-Zuflußleitung (65) und Wasser-Abflußleitung (68) zumindest einer Brauchwasser-Anlage (87) angeschlossen sind.

5. Wärmepumpenanlage nach einem der Ansprüche 1 bis 4, dadurch gekennzeichnet, daß eine thermoventilgesteuerte Überbrückungsleitung (69) zwischen der Wasser-Zuflußleitung (65) und Wasser-Abflußleitung (68) vorgesehen ist.

6. Wärmepumpenanlage nach einem der Ansprüche 1 bis 5, dadurch gekennzeichnet, daß der Kondensator in an sich bekannter Weise eine Rohrleitung (62) umfaßt, die im radialen Abstand von einem äußeren Rohr oder Schlauch umgeben ist unter Ausbildung eines Durchgangs, an dessen einem Ende eine Wasser-Zuflußleitung und an desen anderem Ende eine Wasser-Abflußleitung angeschlossen ist.

7. Wärmepumpenanlage nach einem der Ansprüche 1 bis 6, dadurch gekennzeichnet, daß in dem Heizkörperbehälter (63) oder an diesem angebaut alle für einen Wärmepumpenbetrieb notwendigen Teile, nämlich Verdichter (80), Kältemittelsammler (81), Entspannungsventil (88), mit Ausnahme jedoch des Verdampfers, angeordnet sind.

8. Wärmepumpenanlage nach einem der Ansprüche 1 bis 7, dadurch gekennzeichnet, daß der Kondensator (61) auf Verdampferbetrieb umschaltbar ist, so daß er auch zum Kühlen von Räumen nutzbar ist.

**Claims**

1. Heat pump device with an evaporator, a compressor and a condenser, whereby the condenser is immersed as part of a radiator (61) in a radiator tank (63) filled with water, and whereby evaporator, compressor and condenser are part of a sealed refrigerating cycle, wherein a water inflow duct (65) and at least one water outflow duct (68) or industrial water plant (87) are connected to the radiator tank (63), and the radiator tank (63) is sub-divided into an upper and a lower section, whereby the lower section can be used as hot water or industrial water apparatus, whilst the upper section shows sealed or unsealed water evaporation openings (75) on its upper side (72).

2. Heat pump device according to Claim 1, wherein a ball valve (76) of the water inflow duct (65) is allocated to the water level control in the radiator tank (63).

3. Heat pump device according to Claim 1 or 2, wherein several radiators (63) are connected placed in parallel to a water inflow duct (65) and water outflow duct (68) of at least one industrial water plant (87).

4. Heat pump device according to Claim 1 or 2, wherein several radiator tanks (63) are connected in series to a water inflow duct (65) and water outflow duct (68) of at least one industrial water plant (87).

5. Heat pump device according to one of Claims 1 to 4, wherein a heat valve-controlled bridging duct (69) is provided between the water inflow duct (65) and water outlfow duct (68).

6. Heat pump device according to one of Claims 1 to 5, wherein the condenser comprises a pipeline (62) in a way known in the art, which is surrounded by an outer pipe or tube radially spaced in the formation of a connecting passage, to one end of which is connected a water inflow duct and to the other end of which is connected a water outflow duct.

7. Heat pump device according to one of Claims 1 to 6, wherein all the parts needed to run a heat pump, i.e. compressor (80), refrigerating agent accumulator (81), decompression valve (88), but with the exception of the evaporator, are laid out in the radiator tank (63) or built on to this.

8. Heat pump device according to one of Claims 1 to 7, wherein the condenser (61) can be switched over to the evaporator plant, so that it can also be used to cool rooms.

**Revendications**

1. Pompe à chaleur, avec un évaporateur, un compresseur et un condenseur, le condenseur en tant que partie d'un corps chauffant (61) étant immergé dans un conteneur de corps chauffant (63) rempli d'eau (64), et l'évaporateur, le compresseur et le condenseur faisant partie d'un circuit fermé de réfrigérant, caractérisé en ce qu'une conduite d'apport d'eau (65) et au moins une conduite de sortie d'eau (68) ou selon le cas une installation d'eau sanitaire (87) sont raccordées au conteneur de corps chauffant (63), et en ce que le conteneur de corps chauffant (63) est divisé en une région supérieure et une région inférieure, la région inférieure étant utilisable pour la fourniture d'eau chaude ou selon le cas d'eau sanitaire, tandis que la région supérieure présente sur son côté supérieur (72) des orifices d'évaporation d'eau (75) qui peuvent être respectivement fermés ou ouverts.

2. Pompe à chaleur selon la revendication 1, caractérisée en ce qu'une vanne à flotteur (76), pour la régulation du niveau d'eau dans le conteneur de corps chauffant (63), est associée à la conduite d'apport d'eau (65).

3. Pompe à chaleur selon la revendication 1 ou 2, caractérisée en ce que plusieurs corps chauffants (63) sont raccordés en parallèle à une conduite d'apport d'eau (65) et une conduite de sortie d'eau (68) d'au moins une installation d'eau sanitaire (87).

4. Pompe à chaleur selon la revendication 1 ou 2, caractérisée en ce que plusieurs corps chauffants (63) sont raccordés les uns à la suite des autres à une conduite d'apport d'eau (65) et une conduite de sortie d'eau (68) d'au moins une installation d'eau sanitaire (87).

5. Pompe à chaleur selon une des revendication 1 à 4, caractérisée en ce qu'une conduite de pontage commandée par thermovalve (69) est prévue entre la conduite d'apport d'eau (65) et la conduite de sortie d'eau (68).

6. Pompe à chaleur selon une des revendications 1 à 5, caractérisée en ce que le condenseur comprend d'une manière en soi connue une conduite tubulaire (62) qui est entourée à distance radiale par un tube ou flexible extérieur en formant un passage à une extrémité duquel est raccordée une conduite d'apport d'eau et à l'autre extrémité duquel est raccordée une conduite de sortie d'eau.

7. Pompe à chaleur selon une des revendications 1 à 6, caractérisée en ce que tous les éléments nécessaires au fonctionnement en pompe à chaleur, à savoir le compresseur (80), le collecteur de réfrigérant (81) et la valve de détente (88), mais à l'exception toutefois de l'évaporateur, sont disposés dans le conteneur de corps chauffant (63) ou montés sur ce dernier.

8. Pompe à chaleur selon une des revendications 1 à 7, caractérisée en ce que le condenseur (61) peut être commuté en fonctionnement en évaporateur, de sorte qu'il peut être également utilisé pour refroidir des locaux.

**Fig. 1**

**Fig. 2**